# EUROPÄISCHE PATENTSCHRIFT

(11) **EP 4 301 634 B1**
(45) Veröffentlichungstag und Bekanntmachung des Hinweises auf die Patenterteilung: **10.09.2025**
(21) Anmeldenummer: 22709670.8
(22) Anmeldetag: 24.02.2022
(51) Int. Cl.: B60R 22/343, H02M 3/156

(54) **GURTAUFROLLER-EINHEIT UND FAHRZEUG MIT EINER SOLCHEN GURTAUFROLLER-EINHEIT**
BELT RETRACTOR UNIT AND VEHICLE WITH SUCH A BELT RETRACTOR UNIT
UNITÉ D'ENROULEUR DE CEINTURE ET VÉHICULE AVEC UNE TELLE UNITÉ D'ENROULEUR DE CEINTURE

(30) Priorität: 04.03.2021 DE 102021105276
(43) Veröffentlichungstag der Anmeldung: 10.01.2024
(73) Patentinhaber: Autoliv Development AB, 447 83 Vårgårda (SE)
(72) Erfinder: RINGS, Philip, 22846 Norderstedt (DE); KUTSCHER, Fooke, 25337 Elmshorn (DE)
(74) Vertreter: Schön, Thilo
(86) Internationale Anmeldenummer: PCT/EP2022/054618
(87) Internationale Veröffentlichungsnummer: WO 2022/184538

(56) Entgegenhaltungen:
- EP-A1- 1 382 495
- WO-A1-82/01288
- WO-A2-2014/019946
- GB-A- 2 398 824
- GB-B- 2 398 824

## Beschreibung

Die Erfindung betrifft eine Gurtaufroller-Einheit nach dem Oberbegriff des Anspruchs 1 sowie ein Fahrzeug mit einer solchen Gurtaufroller-Einheit nach Anspruch 7.

Jedes moderne Personenkraftfahrzeug, aber auch die meisten LKW, Busse und dergleichen weisen Sicherheitsgurtsysteme auf. Ein solches Sicherheitsgurtsystem hat stets eine Gurtaufroller-Einheit, welche wiederum einen Gurtaufroller mit einem Gehäuse und einer drehbar in diesem Gehäuse gelagerten Gurtspule aufweist. Ein Teil des Gurtbandes des Sicherheitsgurtsystems ist auf dieser Gurtspule aufgewickelt und der Nutzer kann es gegen die Kraft einer zwischen Gurtspule und Gehäuse wirkenden Rückstellfeder von der Gurtspule abwickeln. Es ist weiterhin eine Blockiereinrichtung vorgesehen, welche einen Freigabezustand, in welchem die Gurtspule nicht gegen das Gehäuse blockiert ist, und einen Blockierzustand, in welchem die Gurtspule gegen das Gehäuse blockiert ist, aufweist. Diese Blockiereinrichtung weist in der Regel zwei voneinander unabhängige Sensoren auf, nämlich einen gurtsensitiven Sensor, welcher die Drehung der Gurtspule sensiert, und einen fahrzeugsensitiven Sensor, welcher die Fahrzeuglage und/oder die Fahrzeugbeschleunigung (insbesondere die negative Fahrzeugbeschleunigung, also die Verzögerung) sensiert. In normalen Fahrzuständen, also wenn das Gurtband nicht zu schnell ausgezogen wird und das Fahrzeug keine ungewöhnliche Lage hat und keine ungewöhnliche Beschleunigung erfährt, befindet sich die Blockiereinrichtung in ihrem unblockierten Zustand und der Nutzer kann das Gurtband ausziehen, sodass er sich relativ frei bewegen kann. Wird das Gurtband jedoch zu schnell ausgezogen und/oder bremst das Fahrzeug beispielsweise zu schnell ab, geht die Blockiereinrichtung in ihrem blockierten Zustand über.

Derzeit sind die Blockiereinrichtungen zumeist vollständig mechanisch ausgebildet, was zur Folge hat, dass die komplette Blockiereinrichtung (einschließlich der Sensoren) starr mit dem Gehäuse des Gurtaufrollers verbunden ist. Diese starre Verbindung der gesamten Blockiereinrichtung mit dem Gehäuse hat jedoch Nachteile, insbesondere wenn die Gurtaufroller-Einheit am Fahrzeugsitz, insbesondere dessen Rückenlehne befestigt ist, da sich in diesem Fall die Position des Gurtaufrollers und damit auch des fahrzeugsensitiven Sensors relativ zum Fahrzeug ändern kann.

Es sind deshalb auch ganz oder teilweise elektrisch arbeitende Gurtaufroller-Einheiten bekannt geworden, deren Blockiereinrichtung eine mit dem Gehäuse verbundene Blockiereinheit mit einem Elektromagnet und eine Steuereinrichtung zur Ansteuerung des Elektromagneten aufweist. Dieser Elektromagnet ist Teil einer elektrisch ansteuerbaren Aktuatoreinheit derart, dass der Zustand der Aktuatoreinheit (insbesondere stromlos oder stromdurchflossen) den Zustand der Blockiereinheit (Gurtspule drehbar oder Gurtspule blockiert) festlegt. Normalerweise weist die Blockiereinheit weiterhin ein dem Elektromagnet entgegenwirkendes Rückstellelement (meist in Form einer Feder) auf. Dieses Rückstellelement kann Teil der Aktuatoreinheit sein. Aus Sicherheitsgründen (fail safe) ist hierbei der stromlose Zustand in der Regel der blockierte Zustand und der stromdurchlossene Zustand ist der entriegelte Zustand. Dementsprechend weist die die Aktuatoreinheit ansteuernde Steuereinrichtung, welche einen mit dem Bordnetz verbundenen Leistungseingang und einen mit dem Elektromagneten verbundenen Leistungsausgang aufweist, einen passiven Schaltzustand, in welchem die Stromzufuhr vom Leistungseingang zum Leistungsausgang unterbrochen ist, und einen aktiven Schaltzustand, in welchem der Leistungseingang mit dem Leistungsausgang verbunden ist und deshalb Strom durch den Elektromagneten fließt, auf. Diese Steuereinrichtung, welche mit der Blockiereinheit in der Regel ausschließlich elektrisch gekoppelt ist, kann in diesem Fall an beliebiger Stelle des Fahrzeugs angeordnet sein, insbesondere so, dass sie sich nicht mit der Rückenlehne bewegt. Eine gattungsgemäße Gurtaufroller-Einheit mit einer solchen Blockiereinheit und einer solchen Steuereinrichtung ist beispielsweise in der GB 23 98 824 B beschrieben. Derartige elektrisch arbeitende Gurtaufroller-Einheiten haben noch weitere Vorteile, da sie mehr Möglichkeiten bieten, den Zustand der Gurtaufroller-Einheit (blockiert / nicht blockiert) zu steuern.

Nachteilig an einer solchen gattungsgemäßen Gurtaufroller-Einheit ist natürlich, dass sie den Stromverbrauch des Fahrzeugs gegenüber einer rein mechanisch arbeitenden Gurtaufroller-Einheit erhöht. Dies gilt umso mehr, als es normalerweise bevorzugt - oder sogar vorgeschrieben - ist, dass die Gurtaufroller-Einheit im stromlosen Zustand, also wenn der Elektromagnet nicht vom Strom durchflossen wird, im verriegelten Zustand vorliegt. Dies bedeutet, dass während des normalen Fahrbetriebes, in welchem die Gurtaufroller-Einheit natürlich in ihrem entriegelten Zustand vorliegt, Strom durch den Elektromagnet fließt, also während des Betriebs des Fahrzeugs ein dauerhafter zusätzlicher elektrischer Verbraucher geschaffen wird. Dies ist natürlich schon bei einem gewöhnlichen Verbrennerfahrzeug unerwünscht, da hierdurch die Lichtmaschine permanent höher belastet wird, wodurch an sich schon der Gesamtenergieverbrauch des Fahrzeugs steigt. Bei ganz oder teilweise elektrisch angetriebenen Fahrzeugen verschärft sich das Problem natürlich noch, da sich ein erhöhter Stromverbrauch negativ auf die Reichweite im Elektrobetrieb auswirkt.

Hiervon ausgehend stellt sich die vorliegende Erfindung die Aufgabe, eine gattungsgemäße Gurtaufroller-Einheit dahingehend zu verbessern, dass ihr Stromverbrauch gesenkt wird.

Diese Aufgabe wird durch eine Gurtaufroller-Einheit mit den Merkmalen des Anspruchs 1 gelöst. Ein Fahrzeug mit einer solchen Gurtaufroller-Einheit ist im Anspruch 7 angegeben.

Die Kraft, welche ein Elektromagnet auf ein magnetisches Element ausübt, hängt bei gegebener Geometrie ausschließlich von der Stärke des den Elektromagneten (also dessen Wicklung) durchfließenden Stromes ab. Die Wicklung eines solchen Elektromagneten stellt im Wesentlichen einen Ohm'schen Widerstand dar, sodass die Stromstärke linear von der angelegten Spannung abhängt. Um bei stormdurchflossenem Elektromagnet die Blockiereinheit in ihrem Zustand zu halten, muss der Elektromagnet eine Mindestkraft auf das von ihm beaufschlagte Element ausüben, was wiederrum bedeutet, dass sichergestellt werden muss, dass der Elektromagnet von einem Strom mit einer Mindeststromstärke durchflossen wird. Legt man nun einfach, wie dies im Stand der Technik bisher der Fall ist, die Bordspannung des Fahrzeugs an den Elektromagneten an, so muss der Elektromagnet so ausgelegt werden, dass die Haltekraft auch dann noch zuverlässig gegeben ist, wenn die Bordspannung ihren zulässigen Mindestwert hat. Hierzu ist zu bemerken, dass die Bordspannung eines Fahrzeuges in einem relativ großen Bereich schwanken kann, insbesondere abhängig vom Ladezustand der Batterie. Dies heißt jedoch, dass dann, wenn die Bordspannung in ihrem regulären, oder oberen Bereich ist, mehr Strom als notwendig durch den Elektromagneten fließt, wodurch unnötig viel Strom verbraucht wird.

Erfindungsgemäß weist die Steuereinrichtung deswegen zwischen ihrem Leistungseingang und ihrem Leistungsausgang wenigstens einen als Konstantstromquelle wirkenden Gleichstrom-Gleichstromwandler auf, sodass die Stromstärke in einem ersten aktiven Schaltzustand einen von der am Leistungseingang anliegenden Spannung unabhängigen, definierten ersten Wert aufweist. Derartige Gleichstrom-Gleichstromwandler, welcher als Konstantstromquelle wirken, sind in der Technik weit verbreitet, haben einen hohen Wirkungsgrad und sind im hier relevanten Leistungsbereich auch sehr preisgünstig.

Durch den Einsatz eines als Konstantstromquelle wirkenden Gleichstrom-Gleichstromwandlers erhält der Elektromagnet der Aktuatoreinheit nur soviel Strom "wie er benötigt", wodurch sich gegenüber dem Stand der Technik eine Stromeinsparung erreichen lässt.

Typischerweise beträgt der erste Wert der Stromstärke zwischen 50 mA und 500 mA.

Weiterhin weist die erfindungsgemäße Steuereinrichtung nicht nur einen, sondern zwei aktive Schaltzustände auf, wobei die Stromstärke im zweiten aktiven Schaltzustand einen höheren Wert als im ersten aktiven Schaltzustand aufweist. Vorzugsweise weist die Stromstärke auch in diesem zweiten aktiven Schaltzustand einen definierten zweiten Wert auf; dieser ist größer als der erste Wert. Die Steuereinheit schaltet bei Entriegelung der Gurtspule vom passiven Schaltzustand zunächst in den zweiten aktiven Schaltzustand und dann in den ersten aktiven Schaltzustand. Diesem Merkmal der Erfindung liegt folgende Überlegung zugrunde: Schaltet die Steuereinrichtung vom passiven Schaltzustand in einen aktiven Schaltzustand, so soll der Elektromagnet der Aktuatoreinheit ein bewegliches Element von einer ersten Stellung in eine zweite Stellung bewegen. In der Regel bedeutet diese Bewegung eine Entriegelung der Blockiereinheit. Danach verbleibt die Blockiereinheit in der Regel relativ oft relativ lange in der entriegelten Stellung, das heißt, dass vom Elektromagneten bewegbare Element verbleibt unbewegt, jedoch vom Elektromagneten gehalten. Es hat sich herausgestellt, dass die Kraft, welche der Elektromagnet aufwenden muss, um das vom Elektromagnet angetriebene Element zu bewegen, wesentlich größer ist, als die Kraft, welche der Elektromagnet aufwenden muss, um dieses Element in seiner "vom Elektromagneten gehaltenen" Position zu halten. Dies bedeutet nach dem oben Gesagten natürlich auch, dass die Stromstärke, welche man benötigt, um den Zustand zu ändern, größer ist als die Stromstärke, welche man benötigt, um den Zustand zu halten. Da natürlich der "Haltezustand" in der Regel sehr viel länger als der eigentliche Zustand andauert, lässt sich sehr viel Energie einsparen, wenn der Strom durch den Elektromagneten im Haltezustand kleiner als während des Schaltvorganges ist. Um ein genau definiertes Schaltverhalten zu erreichen und den Energieverbrauch und den Verschleiß weiter zu minimieren, weist die Stromstärke auch im zweiten aktiven Schaltzustand vorzugsweise einen definierten, von der am Leistungseingang anliegenden Spannung unabhängigen Wert auf. Das heißt, dass auch in diesem zweiten akiven Schaltzustand der durch den Elektromagneten fließende Strom von einem Gleichstrom-Gleichstrom-Wandler bereitgestellt wird. Hierbei kann zur Realisierung der beiden aktiven Schaltzustände ein schaltbarer Gleichstrom-Gleichstrom-Wandler eingesetzt werden. Da jedoch der erste aktive Schaltzustand in der Regel über einen sehr viel längeren Zeitraum als der zweite aktive Schaltzustand vorliegt, ist es zur Energieeinsparung im Vergleich zum Stand der Technik nicht unbedingt zwingend, dass der den Elektromagneten durchfließende Strom im zweiten aktiven Schaltzustand von einem Gleichstrom-Gleichstrom-Wandler bereitgestellt wird. Die Schaltung muss nur so gewählt werden, dass die Stromstärke im zweiten aktiven Schaltzustand in jedem Fall (also auch bei niedriger Spannung des Bordnetztes) ausreicht, um eine Bewegung des vom Elektromagnet angetriebenen Elements sicherzustellen.

Aus der erfindungsgemäßen Ausgestaltung der Gurtaufroller-Einheit ergeben sich noch weitere Vorteile:
Der Steuerstrom des Elektromagneten benötigt natürlich auch eine Steuerspannung an ebendiesem. Mit dem Gleichstrom-Gleichstromwandler ist die Spannung am Elektromagneten unabhängig von der Fahrzeugbatteriespannung. Das heißt, dass jegliche Schwankung der Fahrzeugbatterieschwankung ausgeglichen werden kann.

Zwar könnte eine Energieeinsparung auch mit einer PWM-Steuerung erreicht werden, was jedoch den Nachteil hat, dass hierdurch in der Regel EMV-relevante Störungen erzeugt werden. Durch die erfindungsgemäße Verwendung eines Gleichstromes werden jedoch jegliche EMV-relevanten Störungen minimiert, da keine PWM Frequenzen erzeugt werden.

Wie bereits erwähnt, hängt die Stärke eines Magnetfeldes eines Elektromagneten in erster Linie vom Stromfluss ab. Mit dem Gleichstrom-Gleichstromwandler können daher auch Temperaturabhängigkeiten und Alterungseffekte ausgeglichen werden, da immer ein konstanter Strom durch den Elektromagneten geleitet wird.

Die Erfindung wird nun anhand eines bevorzugten Ausführungsbeispiels mit Bezug auf die Figuren näher erläutert. Hierbei zeigen:
- Figur 1: Eine schematische Darstellung einer Gurtaufroller-Einheit, wobei der Gurtaufroller dieser Gurtaufroller-Einheit in einer schematischen seitlichen Draufsicht dargestellt ist, wobei sich die Steuereinrichtung in ihrem passiven Schaltzustand befindet und wobei sich der Gurtaufroller in seinem verriegelten Zustand befindet,
- Figur 2: den in Figur 1 gezeigten Gurtaufroller in einer schematischen Draufsicht von oben,
- Figur 3: das in Figur 1 Gezeigte, wobei sich die Steuereinrichtung in einem aktiven Schaltzustand befindet und sich der Gurtaufroller in seinem entriegelten Zustand befindet,
- Figur 4a: eine detailliertere Darstellung eines Ausführungsbeispiels einer Steuereinrichtung, wie sie in den Figuren 1 und 3 vereinfacht dargestellt ist, wobei sie sich in einem ersten aktiven Schaltzustand befindet,
- Figur 4b: die Steuereinrichtung aus Figur 4a, wobei sie sich in ihrem zweiten aktiven Schaltzustand befindet,
- Figur 4c: die Steuereinrichtung aus den Figuren 4a und 4b, wobei sie sich in ihrem passiven Schaltzustand befindet, und
- Figur 5: ein typisches Zeit-Stromstärke-Diagramm des durch den Elektromagneten der Blockiereinheit fließenden Stromes.

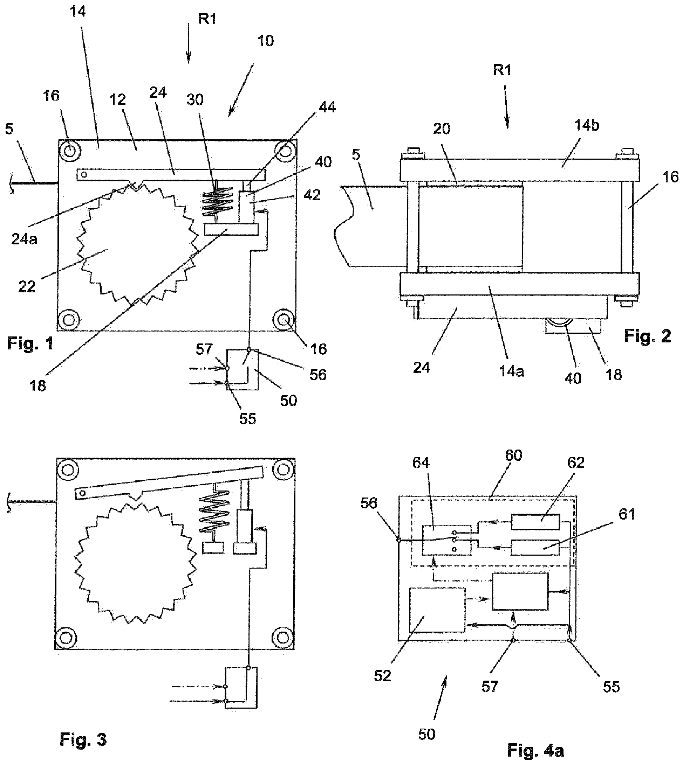

Mit Bezug auf die Figuren 1 und 2 werden zunächst die wesentlichen Merkmale einer erfindungsgemäßen Gurtaufroller-Einheit beschreiben. Hier ist zu beachten, dass die Darstellungen sehr schematisch sind und lediglich die Grundprinzipien der Erfindung darstellen. Die Gurtaufroller-Einheit kann man als aus dem Gurtausroller 10 und der Steuereinrichtung 50 bestehend betrachten. Hierbei könnte die Steuereinrichtung 50 unmittelbar mit dem Gehäuse des Gurtaufrollers 10 verbunden sein, muss dies aber nicht, weswegen sie in den Figuren 1 und 3 auch als vom Gehäuse entfernt dargestellt ist. Natürlich müssen Steuereinrichtung und Gurtaufroller elektrisch miteinander verbunden sein.

Im Folgenden sind elektrische Leitungen nur schematisch (und nicht mit Hin- und Rückleitung) dargestellt. Hierbei sind Leistungsleitungen als durchgezogene Linien und Signalleitungen als Linien mit dem Muster "Strich-Doppelpunkt-Strich" dargestellt.

Der Gurtaufroller 10 besteht, wie gewöhnlich, aus einem Gehäuse 10, einer drehbar im Gehäuse gelagerte Gurtspule 20, auf welcher ein Abschnitt eines Gurtbands 5 aufgewickelt ist, und einer Blockiereinheit zur Blockierung der Gurtspule 20 im Gehäuse 12. Im gezeigten Ausführungsbeispiel weist das Gehäuse 12 zwei über Verbindungsbolzen 16 verbundene Gehäuseplatten 14a, 14b auf, dies ist jedoch nur als beispielhaft zu verstehen. In der Regel, und dies ist hier auch dargestellt, weist die Blockiereinheit ein drehfest mit der Gurtspule 20 verbundenes Blockierrad 22 auf. Es ist weiterhin eine Sperrklinke 24a vorgesehen, welche im Blockierzustand (Figur 1) das Blockierrad 22 und damit die Gurtspule 20 gegen das Gehäuse 12 blockiert, im Freigabezustand (Figur 3) jedoch nicht.

Wesentlich ist, dass die Position der Sperrklinke 24a direkt (wie gezeigt) oder indirekt von einer einen Elektromagneten 42 aufweisenden Aktuatoreinheit 40 gesteuert wird. Im gezeigten Ausführungsbeispiel ist diese Beeinflussung dadurch gegeben, dass die Aktuatoreinheit 40 außer dem Elektromagneten 42 einen vom Elektromagneten angetriebenen Stößel 44 aufweist, welcher auf einen Hebel 24 wirkt, welcher die Sperrklinke 24a trägt. Wird der Elektromagnet von einem hinreichend starken Strom durchflossen, drückt er den Stößel 44 nach außen. Wie bereits erwähnt, ist jedoch festzuhalten, dass diese Konstruktion nur als beispielhaft zu verstehen ist. Wesentlich ist, dass die Blockiereinheit einen Elektromagneten derart aufweist, dass die Aktuatoreinheit abhängig vom Stromfluss durch den Magneten die Blockiereinheit steuert. In der Regel, und dies ist auch dargestellt, ist eine Feder, hier eine Zugfeder 30, oder ein anderes elastisches Element vorgesehen, welche den Zustand der Blockiereinheit eindeutig definiert, wenn der Elektromagnet 42 der Aktuatoreinheit 40 stromlos ist und somit keine Kraft auf den von ihm angetriebenen Stößel ausübt. Dieser stromlose Zustand ist, wie dies auch in den Figuren dargestellt ist, der verriegelte Zustand.

Derartige elektrisch gesteuerte Blockiereinheiten mit einem Elektromagneten sind im Stand der Technik bekannt. Die Erfindung betrifft deshalb auch ausschließlich die Ansteuerung des Elektromagneten, also die Steuereinrichtung 50.

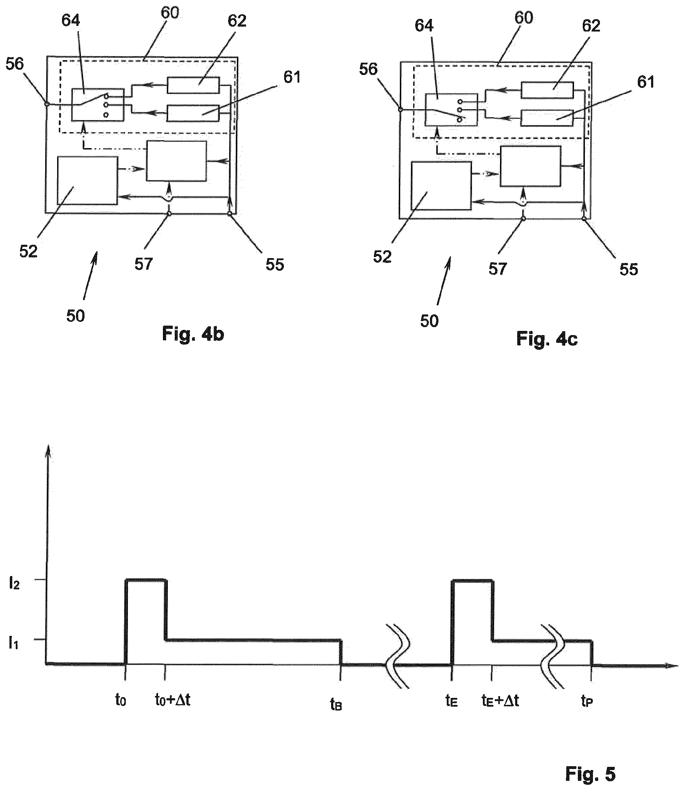

Wie dies oben bereits erläutert wurde, ist der Kern der Erfindung darin zu sehen, dass die Steuereinrichtung 50 wenigstens einen als Konstantstromquelle wirkenden Gleichstrom-Gleichstromwandler aufweist, sodass in einem ersten aktiven Schaltzustand der Steuereinrichtung 50 nur Strom der Stärke an den Elektromagneten geliefert wird, welcher für die Beibehaltung des gewünschten Zustandes (nämlich des entriegelten Zustandes) ausreichend ist. Wie dies oben bereits ebenfalls erläutert wurde, weist die Steuereinrichtung bevorzugt drei Schaltzustände auf, nämlich einen ersten aktiven Schaltzustand, einen zweiten aktiven Schaltzustand und einen passiven Schaltzustand. Im passiven Schaltzustand liefert die Steuereinrichtung keinen Strom an den Elektromagneten, im ersten aktiven Schaltzustand liefert die Steuereinrichtung einen Strom an den Elektromagneten, dessen Stärke einen definierten ersten Wert I₁ aufweist und im zweiten aktiven Schaltzustand liefert die Steuereinrichtung Strom an den Elektromagneten, dessen Stromstärke einen definierten zweiten Wert I₂ aufweist. Ein mögliches schematisches Schaltbild einer solchen Steuereinrichtung ist in den Figuren 4a bis 4c gezeigt und wird nachfolgend beschreiben:
Die Steuereinheit weist einen am Bordnetz des Fahrzeugs angeschlossenen Leistungseingang 55 und einen mit dem Elektromagneten 42 der Aktuatoreinheit 40 verbundenen Leistungsausgang 56 auf. Weiterhin weist die Steuereinrichtung einen Signaleingang 57 und/oder eine eigene Sensoreinheit 52 (Im gezeigten Ausführungsbeispiel ist beides vorhanden, was jedoch nicht zwingend ist), einen schaltbaren Gleichstrom-Gleichstrom-Wandler 60 und eine Logikeinheit 54 auf. Die Sensoreinheit 52 kann insbesondere einen Beschleunigungssensor sein, welcher dann ein Signal an eine Logikeinheit 54 ausgibt, wenn ein vorbestimmter Beschleunigungswert über- beziehungsweise unterschritten wird. Diese Logikeinheit 54 steuert abhängig von den erhaltenen Signalen den schaltbaren Gleichstrom-Gleichstromwandler 60 an, welcher in der Lage ist, ausgehend von der Bordspannung, welche ihm über den Leistungseingang 55 zugeführt wird, über den Leistungsausgang 56 drei definierte Stromstärken an dem Elektromagneten 42 zu liefern. Im gezeigten Ausführungsbeispiel weist der Gleichstrom-Gleichstromwandler 60 eine erste Wandlereinheit 61 zur Erzeugung der definierten ersten Stromstärke mit einem ersten Wert I₁, eine zweite Wandlereinheit 62 zur Erzeugung der definierten zweiten Stromstärke mit einem zweiten Wert I₂ und einen drei Positionen aufweisenden Auswahlschalter 64 auf, wobei I₂ > I₁. Der Auswahlschalter 64 wird von der Logikeinheit 54 angesteuert. In dem in Figur 4a gezeigten Schaltzustand des Auswahlschalters 64 liefert die erste Wandlereinheit 61 Strom an den Elektromagneten, in dem in Figur 4b gezeigten Schaltzustand die zweite Wandlereinheit 62, in dem in Figur 4b gezeigten Schaltzustand ist der Elektromagnet stromlos. Zumindest dann, wenn die Bordspannung am Leistungseingang 55 anliegt, entspricht der Schaltzustand der Steuereinheit dem Schaltzustand des Auswahlschalters.

Die Figur 5 zeigt die Funktionsweise der Logikeinheit 54 anhand des abgegebenen Stroms.

Wenn das Fahrzeug nicht in Betrieb ist, ist das Leitungsnetz des Fahrzeugs in der Regel abgeschaltet und schon hieraus ergibt sich, dass der Elektromagnet nicht mit Strom versorgt wird, sodass der Gurtaufroller im Zustand der Figur 1 ist. Alternativ oder zusätzlich kann sich der Auswahlschalter in seinem in Figur 4c gezeigten Schaltzustand befinden. Entsprechend der hier gewählten Definitionen befindet sich die Steuereinrichtung in ihrem passiven Schaltzustand. Wird nun das Fahrzeug in Betrieb gesetzt, steuert die Logikeinheit 54 den Auswahlschalter 64 zu einem Zeitpunkt t₀ (beispielsweise nach erfolgter Systemprüfung) derart an, dass er in seinem in Figur 4b gezeigten Schaltzustand vorliegt, sodass Strom mit der Stärke I₂ durch den Elektromagneten 42 fließt, wodurch dieser genug Kraft entwickelt, um den Stößel 44 zu bewegen und so die Blockiereinheit in ihren entriegelten Zustand zu bringen. Nach Ablauf eines vorgegebenen Zeitinterfalles Δt (welches unter einer Sekunde betragen kann) steuert die Logikeinheit 54 nun den Auswahlschalter 64 derart an, dass er in den in Figur 4a gezeigten Schaltzustand übergeht, wodurch die erste Wandlereinheit 61 Strom mit der Stärke I₁ an den Elektromagneten liefert. Diese Stromstärke I₁ ist ausreichend, um die Blockiereinheit in ihrem entriegelten Zustand zu halten. Wird nun der Logikeinheit 54 über den Signaleingang 57 oder durch die Sensoreinheit 54 ein Signal zugeführt, welches auf einen Unfall hindeutet, so steuert die Logikeinheit 54 den Auswahlschalter 64 derart an, dass er in seinen offenen Zustand (Figur 4c) übergeht, der Stromfluss zum Elektromagneten 42 also unterbrochen wird und der Gurtaufroller in seinen in Figur 1 gezeigten Zustand übergeht. Ändert sich das Signal nun wieder derart, dass kein Unfall oder eine gefährliche Situation mehr vorliegt, so wird das eben Beschriebene wiederholt, nämlich zuerst fließt für ein Zeitintervall Δt ein Strom der Stärke I₂ durch den Elektromagneten und nach Ablauf dieses Zeitintervalls ein Strom mit der Stärke I₁.

Wesentlich ist also, dass beim Übergang vom blockierten Zustand in den unblockierten Zustand immer zunächst ein stärkerer Strom durch den Magneten fließt und im nachfolgenden Haltezustand ein schwächerer.

Somit ergibt sich insgesamt ein gegenüber dem Stand der Technik deutlich verringerter Stromverbrauch, was insbesondere im Hinblick auf ganz oder teilweise elektrisch angetriebene Fahrzeuge von großem Vorteil ist.

### Bezugszeichenliste

- 5: Gurtband
- 10: Gurtaufroller
- 12: Gehäuse
- 14a,b: Gehäuseplatte
- 16: Verbindungsbolzen
- 18: Halterung für Feder und Aktuatoreinheit
- 20: Gurtspule
- 22: Blockierrad
- 24: Hebel
- 24a: Sperrklinke
- 30: Zugfeder
- 40: Aktuatoreinheit
- 42: Elektromagnet
- 44: Stößel
- 50: Steuereinrichtung
- 52: Sensoreinheit
- 54: Logikeinheit
- 55: Leistungseingang
- 56: Leistungsausgang
- 57: Signaleingang
- 60: schaltbarer Gleichstrom-Gleichstrom-Wandler
- 61: erste Wandlereinheit
- 62: zweite Wandlereinheit
- 64: Auswahlschalter

## Patentansprüche

1. Gurtaufroller-Einheit mit
einem Gehäuse (10),
einer in diesem Gehäuse (10) drehbar gelagerten Gurtspule (20),
einer Blockiereinheit zur Blockierung der Gurtspule gegen das Gehäuse, wobei die Blockiereinheit eine Aktuatoreinheit (40) mit einem Elektromagneten (42) aufweist und
einer Steuereinrichtung (50) zur Ansteuerung des Elektromagneten (42), welche einen Leistungseingang (55), einen mit dem Elektromagneten (42) verbundenen Leistungsausgang (56) und wenigstens einen Signaleingang (57) zum Empfang eines Steuersignals und/ oder eine Sensoreinheit (52) zur Erzeugung eines Steuersignals aufweist, wobei die Steuereinrichtung (50) wenigstens einen ersten aktiven Schaltzustand und einen passiven Schaltzustand hat, wobei im ersten aktiven Schaltzustand ein elektrischer Strom zwischen dem Leistungsausgang (56) und dem Elektromagneten (42) fließt, dessen Stromstärke größer ist als im passiven Schaltzustand,
wobei die Gurtspule (20) gegen das Gehäuse (12) verriegelt ist, wenn sich die Steuereinrichtung (50) im passiven Schaltzustand befindet,
**dadurch gekennzeichnet, dass**
die Steuereinrichtung (50) zwischen dem Leistungseingang und dem Leistungsausgang wenigstens einen als Konstantstromquelle wirkenden Gleichstrom-Gleichstrom-Wandler (60) aufweist, sodass die Stromstärke im ersten aktiven Schaltzustand einen von der am Leistungseingang anliegenden Spannung unabhängigen, definierten ersten Wert (I₁) aufweist,
die Steuereinrichtung (50) einen zweiten aktiven Schaltzustand aufweist, in welchem die Stromstärke größer als im ersten aktiven Schaltzustand ist, und
die Steuereinheit (50) bei Entriegelung der Gurtspule (20) vom passiven Schaltzustand zunächst in den zweiten aktiven Schaltzustand und dann in den ersten aktiven Schaltzustand schaltet.

2. Gurtaufroller-Einheit nach Anspruch 1, **dadurch gekennzeichnet, dass** der erste Wert (I₁) zwischen 50 mA und 500 mA beträgt.

3. Gurtaufroller-Einheit nach Anspruch 1 oder Anspruch 2, **dadurch gekennzeichnet, dass** im zweiten aktiven Schaltzustand die Stromstärke einen von der am Leistungseingang (55) anliegenden Spannung unabhängigen, definierten zweiten Wert (I₂) aufweist, welcher größer als der erste Wert ist.

4. Gurtaufroller-Einheit nach Anspruch 3, **dadurch gekennzeichnet, dass** der zweite Wert (I₂) wenigstens doppelt so groß wie der erste Wert (I₁) ist und vorzugsweise zwischen 150 mA und 1500 mA beträgt.

5. Gurtaufroller-Einheit nach einem der vorangehenden Ansprüche, **dadurch gekennzeichnet, dass** der zweite aktive Schaltzustand für ein Zeitintervall Δt erhalten bleibt, wobei vorzugsweise 5 ms ≤ Δt ≤ 200 ms, weiter vorzugsweise 20 ms ≤ Δt ≤ 50 ms.

6. Gurtaufroller-Einheit nach einem der vorangehenden Ansprüche, **dadurch gekennzeichnet**, die Stromstärke zwischen Leistungsausgang (56) und Elektromagnet (42) im passiven Schaltzustand im Wesentlichen null beträgt.

7. Fahrzeug mit einem Elektroantrieb, welches eine Gurtaufroller-Einheit nach einem der Ansprüche 1 bis 6 aufweist.

## Claims

1. Belt retractor unit comprising
a housing (10),
a belt reel (20) rotatably mounted in said housing (10),
a locking unit for locking the belt reel against the housing, wherein the locking unit has an actuator unit (40) having an electromagnet (42), and
a control device (50) for controlling the electromagnet (42), having a power input (55), a power output (56) connected to the electromagnet (42), and at least one signal input (57) for receiving a control signal, and/or a sensor unit (52) for generating a control signal, wherein the control device (50) has at least one first active switching state and one passive switching state, wherein in the first active switching state, an electrical current flows between the power output (56) and the electromagnet (42), the current intensity of which is greater than in the passive switching state, wherein the belt reel (20) is locked against the housing (12) when the control device (50) is in the passive switching state,
**characterized in that**
the control device (50) has at least one DC-to-DC converter (60) acting as a constant current source between the power input and the power output, so that the current intensity in the first active switching state has a defined first value (I₁) which is independent of the voltage applied at the power input, the control device (50) has a second active switching state in which the current intensity is greater than in the first active switching state, and, when the belt reel (20) is unlocked, the control unit (50) first switches from the passive switching state to the second active switching state and then to the first active switching state.

2. Belt retractor unit according to claim 1, **characterized in that** the first value (I₁) is between 50 mA and 500 mA.

3. Belt retractor unit according to claim 1 or claim 2, **characterized in that** in the second active switching state, the current intensity has a defined second value (I₂) which is independent of the voltage applied at the power input (55) and is greater than the first value.

4. Belt retractor unit according to claim 3, **characterized in that** the second value (I₂) is at least twice as great as the first value (I₁) and is preferably between 150 mA and 1500 mA.

5. Belt retractor unit according to any of the preceding claims, **characterized in that** the second active switching state is maintained for a time interval Δt, wherein preferably 5 ms ≤ Δt ≤ 200 ms, more preferably 20 ms ≤ Δt ≤ 50 ms.

6. Belt retractor unit according to any of the preceding claims, **characterized in that** the current intensity between the power output (56) and the electromagnet (42) in the passive switching state is substantially zero.

7. Vehicle comprising an electric drive, which has a belt retractor unit according to any of claims 1 to 6.

## Revendications

1. Unité formant enrouleur de ceinture comportant
un boîtier (10),
une bobine de ceinture (20) montée de manière à pouvoir tourner dans ledit boîtier (10),
une unité de blocage permettant de bloquer la bobine de ceinture à l'encontre du boîtier, dans laquelle l'unité de blocage présente une unité formant actionneur (40) comportant un électroaimant (42), et
un dispositif de commande (50) permettant de commander l'électroaimant (42), présentant une entrée de puissance (55), une sortie de puissance (56) connectée à l'électroaimant (42) et au moins une entrée de signal (57) permettant de recevoir un signal de commande et/ou une unité formant capteur (52) permettant de générer un signal de commande, dans laquelle le dispositif de commande (50) possède au moins un premier état de commutation actif et un état de commutation passif, dans laquelle, dans le premier état de commutation actif, un courant électrique circule entre la sortie de puissance (56) et l'électroaimant (42), dont l'intensité de courant est supérieure à celle de l'état de commutation passif, dans laquelle la bobine de ceinture (20) est verrouillée à l'encontre du boîtier (12) lorsque le dispositif de commande (50) se trouve à l'état de commutation passif,
**caractérisé en ce que**
le dispositif de commande (50) présente, entre l'entrée de puissance et la sortie de puissance, au moins un convertisseur à courant continu (60) agissant comme source de courant constant, de sorte que l'intensité de courant présente, dans le premier état de commutation actif, une première valeur (I₁) définie indépendante de la tension appliquée à l'entrée de puissance, le dispositif de commande (50) présente un second état de commutation actif dans lequel l'intensité de courant est supérieure à celle du premier état de commutation actif, et l'unité de commande (50) passe d'abord de l'état de commutation passif au second état de commutation actif, puis au premier état de commutation actif, lors du déverrouillage de la bobine de ceinture (20).

2. Unité formant enrouleur de ceinture selon la revendication 1,
**caractérisée en ce que** la première valeur (I₁) est comprise entre 50 mA et 500 mA.

3. Unité formant enrouleur de ceinture selon la revendication 1 ou la revendication 2, **caractérisée en ce que,** dans le second état de commutation actif, l'intensité de courant présente une seconde valeur (I₂) définie, indépendante de la tension appliquée à l'entrée de puissance (55), laquelle seconde valeur est supérieure à la première valeur.

4. Unité formant enrouleur de ceinture selon la revendication 3,
**caractérisée en ce que** la seconde valeur (I₂) est au moins deux fois plus grande que la première valeur (I₁) et est de préférence comprise entre 150 mA et 1500 mA.

5. Unité formant enrouleur de ceinture selon l'une des revendications précédentes, **caractérisée en ce que** le second état de commutation actif est maintenu pendant un intervalle de temps Δt, de préférence 5 ms ≤ Δt ≤ 200 ms, de manière particulièrement préférée 20 ms ≤ Δt ≤ 50 ms.

6. Unité formant enrouleur de ceinture selon l'une des revendications précédentes, **caractérisée en ce que** l'intensité de courant entre la sortie de puissance (56) et l'électroaimant (42) est sensiblement nulle à l'état de commutation passif.

7. Véhicule à propulsion électrique présentant une unité formant enrouleur de ceinture selon l'une des revendications 1 à 6.
